# EUROPÄISCHE PATENTSCHRIFT

(11) **EP 0 582 282 B1**
(45) Veröffentlichungstag und Bekanntmachung des Hinweises auf die Patenterteilung: **25.09.1996**
(21) Anmeldenummer: 93112477.0
(22) Anmeldetag: 04.08.1993
(51) Int. Cl.: F25B 9/06, B60H 1/32

(54) **Kaltluft-Kältemaschinen-Anlage**
Cold air refrigerating installation
Installation frigorifique à air froid

(30) Priorität: 06.08.1992 DE 4225980; 04.02.1993 DE 4303219
(43) Veröffentlichungstag der Anmeldung: 09.02.1994
(73) Patentinhaber: ABB PATENT GmbH, D-68309 Mannheim (DE)
(72) Erfinder: Henatsch, Alfred, Prof. Dr.-Ing., D-8020 Dresden (DE); Morgenstern,Jens, D-8020 Dresden (DE); Remenyi, Karl, D-6800 Mannheim 24 (DE); Frank, Dieter, D-6700 Ludwigshafen (DE)
(74) Vertreter: Rupprecht, Klaus, Dipl.-Ing.

(56) Entgegenhaltungen:
- DD-A- 270 359
- GB-A- 2 153 513
- GB-A- 2 234 053
- US-A- 3 877 246
- US-A- 4 246 759
- US-A- 5 086 622

## Beschreibung

Die Erfindung bezieht sich auf eine Kaltluft-Kältemaschinen-Anlage gemäß dem Oberbegriff der nebengeordneten Ansprüche 1, 2 und 12 und kann insbesondere für Klimaanlagen in Fahrzeugen, insbesondere Reisezugwagen, verwendet werden.

Eine solche Kaltluft-Kältemaschinen-Anlage ist aus der DD 270 359 A1 bekannt.

Es ist allgemein bekannt, in Klimaanlagen von Fahrzeugen zum Kühlen von Luft Kaltdampf-Kältemaschinen mit mechanischem Verdichter einzusetzen und die Aufheizung von Luft meist elektrisch oder in Verbindung mit Verbrennungsmotoren auch mit noch nutzbarer Anfallenergie des Kühl- bzw. Abgassystems zu bewirken.

Die in Kaltdampf-Kältemaschinen bisher verwendeten Fluor-Chlor-Kohlenwasserstoffe (FCKW) als Sicherheitskältemittel müssen durch umweltfreundliche alternative Kältemitersetzt werden. Aber auch durch alternative Kältemittel sind grundsätzliche Nachteile der Kaltdampf-Kältemaschine bei ihrem Einsatz in Fahrzeug-Klimaanlagen, beispielsweise ihre große Anlagenmasse, ihr großer Platzbedarf, der notwendige hohe maximale Anlagendruck, das ständige Mitführen eines teuren Kältemittels sowie ihr träges Anfahrverhalten nicht abzustellen.

Da das Kältemittel von Kaltdampf-Kältemaschinen stets in einem geschlossenen Prozeß geführt werden muß, haftet den Kaltdampf-Kältemaschinen des weiteren auch der Nachteil an, daß ihr Einsatz in Klimaanlagen schienengebundener Hochgeschwindigkeits-Fahrzeuge zusätzlich technisch und energetisch aufwendige und somit teure Einrichtungen zum Vermeiden von Druckstößen, die z.B. bei Begegnungen von Hochgeschwindigkeitszügen und bei Tunneldurchfahrten auftreten, erforderlich macht.

Gemäß DD 270 359 A1 ist eine zweistufige offene Kaltluft-Kältemaschine bekannt, die den Forderungen der Luftkühlung in Klimaanlagen, insbesondere auch für Hochgeschwindigkeits-Fahrzeuge, gerecht werden kann. Dieser Kaltluft-Kältemaschine haftet jedoch der Nachteil an, daß sie nicht die Aufgabe einer Lufterwärmung zum Zwecke einer Heizlastkompensation übernehmen kann. Die bekannte Kältemaschine verlangt ein herkömmliches Aufheizen der Luft, z.B. mit Hilfe einer elektrischen Widerstandsheizung, so daß im Heizbetrieb die technisch und energetisch hohen Aufwendungen zum Abbau von Druckstößen in schienengebundenen Hochgeschwindigkeits-Fahrzeugen zusätzlich erforderlich sind.

Der Erfindung liegt die Aufgabe zugrunde, eine Kaltluft-Kältemaschinen-Anlage der eingangs genannten Art derart zu ergänzen, daß sie auch als Wärmepumpe zum Heizen der Luft betrieben werden kann, wobei Druckstöße auch ohne zusätzliche Aufwendungen abgebaut werden sollen.

Diese Aufgabe wird alternativ in Verbindung mit den Merkmalen des Oberbegriffes erfindungsgemäß durch die im Kennzeichen des Anspruchs 1, 2 und 12 angegebenen Merkmale gelöst.

Die mit der Erfindung erzielbaren Vorteile bestehen insbesondere darin, daß eine insbesondere für Klimaanlagen in Fahrzeugen geeignete Kaltluft-Kältemaschinen-Wärmepumpen-Anlage geschaffen wird, bei der die wesentlichen Hauptbaugruppen im Kühl-, Heiz- und Druckbelüftungsbetrieb eingesetzt werden können. Die erfindungsgemäße Anlage arbeitet im Vergleich zur elektrischen Widerstandsheizung im Heizbetrieb energiesparend und übernimmt darüberhinaus auch die Funktion des Druckschutzes im Kühl-, Heiz- und Druckbelüftungsbetrieb ohne zusätzliche energieaufwendige Druckschutzlüfter und/oder -ventile. Die thermisch aufzubereitende Zuluft im Kühl-, Heiz- und Druckbelüftungsbetrieb wird so durch die Baugruppen der Anlage, wie Vorverdichter, Nachverdichter, Turbine, Wärmeübertrager, elektrisches Nachheizaggregat, Mischkammer, Ansauggitter und -filter, Stellventile und Luftkanäle der Anlage geleitet, daß die in schienengebundenen Hochgeschwindigkeits-Fahrzeugen beispielsweise bei Zugbegegnungen und Tunneldurchfahrten auftretenden Druckstöße allein durch die Reibungswiderstände dieser in Reihe geschalteten Baugruppen und ohne Druckschutzlüfter und/oder -ventile an der Luftansaugstelle bis zum Wirkungsbereich der Klimatisierung abgebaut werden, so daß sowohl Bauaufwand als auch Antriebsleistung eingespart werden.

Im Kühlbetrieb wird die Zuluft, die aus Außen- aber auch Außen- und Umluft bestehen kann, in einer zweistufigen offenen Kaltluft-Kältemaschine gekühlt, wobei von außen auf die Anlage auftreffende Druckstöße dadurch abgebaut werden, daß die Zuluft zwei Verdichter, zwei Wärmeübertrager, eine Luftentspannungsturbine, Luftkanäle und mehrere Stellventile durchströmen muß. Es ergibt sich ebenfalls die vorteilhafte Einsparung hinsichtlich Bauaufwand und Antriebsleistung.

Durch Zuschalten des bei der ersten Grundanordnung zusätzlich möglichen dritten Wärmeübertragers, in dem der Umgebung Wärme entzogen wird, arbeitet die nun geschlossene, zweistufige Kältemaschine als Wärmepumpe derart, daß die Aufheizung des Außenluftanteiles der Zuluft in den zwei oder auch nur in einem der für den offenen Kältemaschinenprozeß erforderlichen Wärmeübertragern erfolgt, wobei der aufzuheizende Außenluftanteil dabei gleichzeitig die Funktion des Kühlluft-Massestromes für den ersten und zweiten Wärmeübertrager übernimmt. Der Abbau von Druckstößen, die von außen auf die Außenluft-Ansaugflächen einwirken können, erfolgt beim Durchströmen des Außenluftanteiles durch die Wärmeübertrager, ein elektrisches Nachheiz-Aggregat und mehrere Stell- und Mischventile.

Alternativ kann auch der erste Wärmeübertrager die Funktion des dritten Wärmeübertragers bei Wärmepumpen-Betrieb übernehmen.

Gemäß einer weiteren Variante der Grundanordnung ohne dritten Wärmeübertrager kann eine offene Wärmepumpe betrieben werden, bei der die zur Beheizung dienende Außenluft wie auch bei der geschlossenen Wärmepumpe nicht über die Verdichter geführt, sondern ein- oder zweistufig über die Wärmeübertrager erhitzt wird.

Bei abgeschaltetem Antriebsmotor der Kaltluft-Kältemaschinen-Wärmepumpen-Anlagen kann mit den Wärmeübertragerlüftern der Kältemaschine auch der Druckbelüftungsbetrieb realisiert werden, wobei auftretende Druckstöße abgebaut werden, indem die aufzubereitende Zuluft durch zwei Wärmeübertrager, einen (abgeschalteten) elektrischen Heizer, eine Mischkammer und mehrere Stellventile bis zum Zuluftkanal geleitet wird.

Gemäß der zweiten Grundanordnung kann die zweistufige offene Kaltluft-Kältemaschine ebenfalls ohne dritten Wärmeübertrager als zweistufige offene Wärmepumpe betrieben werden. Den Wärmeentzug aus der Umgebung übernimmt der bei der Kaltluft-Kältemaschine im oberen Druckbereich als Kühler arbeitende Wärmeübertrager. Druckstöße werden bei dieser Anlage dadurch abgebaut, daß die zur Beheizung dienende Außenluft wie bei der zweistufigen offenen Kaltluft-Kältemaschine eine Luftentspannungsturbine, zwei Verdichter und Wärmeübertrager, Luftkanäle, mehrere Stell- und Mischventile sowie ein elektrisches Nachheizaggregat durchströmen muß.

Außerdem besteht bei der zweiten Grundanordnung die Möglichkeit, den Druckbelüftungsbetrieb mit dem durch einen elektrischen Motor angetriebenen Nachverdichter aufrechtzuerhalten. Dazu saugt der beim Kälte- und Wärmepumpen-Prozeß in der zweiten Stufe arbeitende Nachverdichter Außenluft an und drückt sie durch Luftkanäle, durch ein elektrisches Nachheizaggregat und durch eine Mischkammer, in der zur Außenluft noch wahlweise Umluft beigemischt werden kann, in den Zuluftkanal. Den Abbau von Druckstößen übernehmen der Luftverdichter, das elektrische Nachheizaggregat, ein Ansauggitter und -filter, die Mischkammer, sowie im Mischluftbetrieb zusätzlich ein eingeschalteter Umluftlüfter.

Wie bei der ersten Grundanordnung ergibt sich auch bei der zweiten Grundanordnung beim Abbau von Druckstößen die vorteilhafte Einsparung hinsichtlich Bauaufwand und Antriebsleistung, und zwar in allen Betriebsarten (Kühlen, Heizen, Druckbelüftung).

Weitere Vorteile der Erfindung sind aus der nachstehenden Beschreibung der Ausführungsbeispiele ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele näher erläutert. Es zeigen:
- Figur 1: eine erste Grundanordnung einer zweistufigen Kaltluft-Kältemaschinen-Wärmepumpen-Anlage,
- Figur 2: eine Variante zur ersten Grundanordnung mit einem gemeinsamen Wärmeübertragerblock,
- Figur 3: eine erste Alternative zur ersten Grundanordnung mit lediglich einstufiger Luftaufheizung,
- Figur 4: eine zweite Alternative zur ersten Grundanordnung mit lediglich einstufiger Luftaufheizung,
- Figur 5: eine dritte Alternative zur ersten Grundanordnung mit lediglich einstufiger Luftaufheizung,
- Figur 6: eine vierte Alternative zur ersten Grundanordnung mit lediglich einstufiger Luftaufheizung,
- Figur 7: eine fünfte Alternative zur ersten Grundanordnung mit ein- oder zweistufiger Luftaufheizung,
- Figur 8: eine zweite Grundanordnung einer zweistufigen Kaltluft-Kältemaschinen-Wärmepumpen-Anlage.

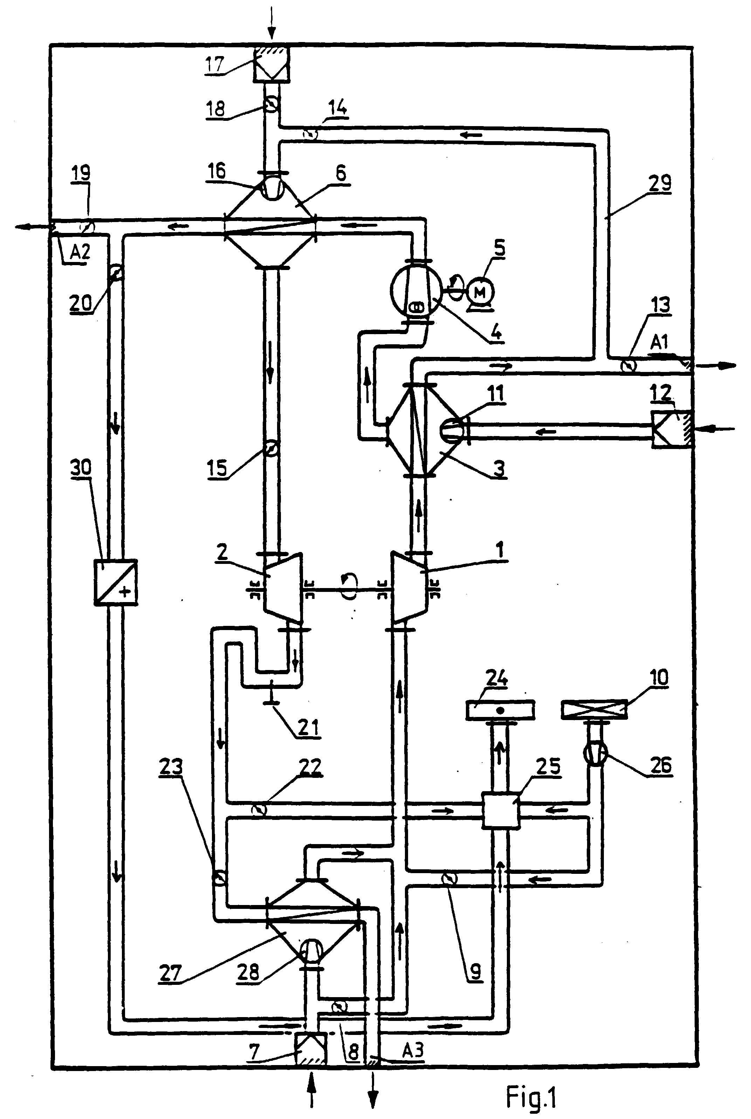

In Figur 1 ist eine erste Grundanordnung einer zweistufigen Kaltluft-Kältemaschinen-Wärmepumpen-Anlage dargestellt. Es ist ein Vorverdichter 1 zu erkennen, der über eine Luftentspannungsturbine 2 antreibbar ist. Der ausgangsseitige Luftkanal des Vorverdichters 1 führt über den ersten Kreis eines Wärmeübertragers 3 zu einem Nachverdichter 4, der über einen Motor 5 antreibbar ist. Der ausgangsseitige Luftkanal des Nachverdichters 4 führt über den ersten Kreis eines Wärmeübertragers 6, ein Druckventil 15, die Luftentspannungsturbine 2 und einen Kondensatabscheider 21 zu zwei Stellventilen 22, 23. Bei offenem Stellventil 22 ergibt sich ein Luftkanal über eine Mischkammer 25 zu einem Zuluftkanal 24 eines Fahrzeuges. Bei offenem Stellventil 23 ergibt sich ein Luftkanal über den ersten Kreis eines Wärmeübertragers 27 zurück zum Vorverdichter 1.

Ein Lüfter 26 fördert die Umluft eines Umluftkanals 10 in die Mischkammer 25 und - bei Öffnung eines Stellventils 9 - zum eingangsseitigen Luftkanal des Vorverdichters 1.

Dieser eingangsseitige Luftkanal des Vorverdichters 1 ist ferner - bei Öffnung eines Stellventiles 8 - mit einem Ansauggitter und -filter 7 verbunden. Das Ansauggitter und -filter 7 führt des weiteren über einen Lüfter 28 und den zweiten Kreis des Wärmeübertragers 27 zu einem Luftauslaß A3.

Ein weiteres Ansauggitter und -filter 12 führt über einen Lüfter 11 und den zweiten Kreis des Wärmeübertragers 3 zu zwei Stellventilen 13, 14, wobei der Luftkanal von der Abzweigung zum Stellventil 14 mit 29 beziffert ist. Bei offenem Stellventil 13 ergibt sich ein Luftkanal zu einem Luftauslaß A1. Bei offenem Stellventil 14 ergibt sich ein Luftkanal über einen Lüfter 16 und den zweiten Kreis des Wärmeübertragers 6 zu zwei weiteren Stellventilen 19, 20. Bei offenem Stellventil 19 wird ein Luftkanal zu einem Luftauslaß A2 gebildet. Bei geöffnetem Stellventil 20 ergibt sich ein Luftkanal über einem elektrischen Nachheizgerät 30 zur Mischkammer 25.

Der zum Stellventil 14 führende Anschluß des zweiten Kreises des Wärmeübertragers 6 führt ferner über ein Stellventil 18 zu einem Ansauggitter und -filter 17.

Im Kühlbetrieb wird mit dem Vorverdichter 1, der von der Luftentspannungsturbine 2 angetrieben wird, dem Wärmeübertrager 3, dem Nachverdichter 4, der von dem Motor 5 angetrieben wird, und dem Wärmeübertrager 6 eine offene zweistufige Kaltluft-Kältemaschine realisiert. Der Vorverdichter 1 saugt über das Ansauggitter und -filter 7 bei geöffnetem Stellventil 8 Außenluft an, die bei geöffnetem Stellventil 9 unter Einsatz des Lüfters 26 aus dem Umluftkanal 10 mit Umluft ergänzt werden kann. Anschließend verdichtet der Vorverdichter 1 die Außen- oder Mischluft auf einen Zwischendruck, bei dem sie in dem Wärmeübertrager 3 mit Außenluft gekühlt wird, welche mit dem Lüfter 11 über das Ansauggitter und -filter 12 angesaugt, in den Wärmeübertrager 3 gedrückt und nach der Wärmeaufnahme bei geöffnetem Stellventil 13 und geschlossenem Stellventil 14 über den Luftauslaß A1 an die Umgebung abgeführt wird. Die so im Wärmeübertrager 3 abgekühlte Luft wird im Nachverdichter 4 auf den maximalen Prozeßdruck, der mit dem Druckventil 15 eingestellt wird, verdichtet und anschließend in dem Wärmeübertrager 6 mit Außenluft bis auf den Eintrittszustand der Luft in die Luftentspannungsturbine 2 heruntergekühlt. Die Kühlluft des Wärmeübertragers 6 saugt der Lüfter 16 über das Ansauggitter und -filter 17 bei geöffnetem Stellventil 18 von außen an, die nach Wärmeaufnahme in dem Wärmeübertrager 6 bei geöffnetem Stellventil 19 und geschlossenem Stellventil 20 über den Luftauslaß A2 an die Umgebung abgeführt wird.

In der Luftentspannungsturbine 2 erfolgt die Entspannung und damit eine Abkühlung der Luft. Bei Unterschreiten der Taupunkttemperatur kommt es zum Ausscheiden flüssigen Wassers aus der feuchten Luft, das sich in dem Kondensatabscheider 21 sammelt und nach Erreichen einer bestimmten Füllstandshöhe nach außen abgelassen wird.

Die nach der Flüssigkeitstrennung gesättigte Luft gelangt bei geöffnetem Stellventil 22 und geschlossenem Stellventil 23 in den Zuluftkanal 24, nachdem sie in der Mischkammer 25 gegebenenfalls durch Zumischen eines weiteren Umluftanteiles aus dem Umluftkanal 10 unter Einsatz des Lüfters 26 zum gewünschten Zuluft-Massestrom für die Kompensation einer bekannten Kühllast des Fahrzeuges ergänzt worden ist.

Durch Zuschalten des dritten Wärmeübertragers 27 läßt sich die aus Vorverdichter 1, Wärmeübertrager 3, Nachverdichter 4, Motor 5, Wärmeübertrager 6 und Luftentspannungsturbine 2 bestehende zweistufige offene Kaltluft-Kältemaschine in eine zur Luftheizung geeignete, als geschlossene Anlage arbeitende Wärmepumpe umfunktionieren. Hierzu wird die aus der Luftentspannungsturbine 2 und dem Kondensatabscheider 21 abströmende kalte und gesättigte Luft bei geöffnetem Stellventil 23 und geschlossenen Ventilen 22 und 9 in den Wärmeübertrager 27 geleitet, in dem sie durch Außenluft erwärmt, vom Vorverdichter 1 angesaugt und so zum Zirkulieren in einem geschlossenen Kreislauf gebracht wird, nachdem der gewünschte Luftmassestrom in der geschlossenen Anlage mit den Stellventilen 8 und/oder 9 mit Außen- und Umluft eingeregelt worden ist. Die im Wärmeübertrager 27 abzukühlende Außenluft wird mit dem Lüfter 28 über das Ansauggitter und -filter 7 bei geschlossenem Stellventil 8 von außen angesaugt und nach Durchströmen des Wärmeübertragers 27 über den Luftauslaß A3 wieder an die Umgebung abgeführt.

Alternativ hierzu ist es auch möglich, die während des Wärmepumpenbetriebes im Wärmeübertrager 27 abgekühlte Außenluft nicht direkt an die Umgebung abzuführen, sondern bei Bedarf zum Kühlen zu nutzen.

In den Wärmeübertragern 3 und 6 der als geschlossene Anlage arbeitenden Wärmepumpe wird der Außenluftanteil der Zuluft zum Kompensieren einer Heizlast des Fahrzeuges aufgeheizt. Die Außenluft wird vom Lüfter 11 über das Ansauggitter und -filter 12 von außen angesaugt, durch den Wärmeübertrager 3 gedrückt, wo sie in einer ersten Stufe vorgewärmt wird. Anschließend wird sie durch den Luftkanal 29 bei geöffneten Stellventilen 14 und 20 sowie geschlossenen Stellventilen 13, 18 und 19 dem Wärmeübertrager 6 zugeleitet, in dem sie in einer zweiten Stufe nachgewärmt wird. Danach wird der aufgeheizte Außenluftanteil in der Mischkammer 25 mit Umluft gemischt und so mit dem gewünschten thermischen Zustand der Zuluft in den Zuluftkanal 24 geleitet. Reicht die Aufheizung des Außenluftanteiles in den Wärmeübertragern 3 und 6 nicht aus, kann dieser unter Wahrung des energetischen Vorteiles einer Wärmepumpe in dem elektrischen Nachheizaggregat 30 nachgeheizt werden.

Bei abgeschaltetem Motor 5 kann ein Druckbelüftungsbetrieb ohne Kühlen und Heizen der Luft realisiert werden, wenn der Lüfter 11 und/oder der Lüfter 16 Außenluft über das Ansauggitter und -filter 12 und/oder 17 ansaugen und diese durch den Wärmeübertrager 3 und/oder 6 ohne Wärmeaufnahme und durch den abgeschalteten elektrischen Nachheizer 30 bis in den Zuluftkanal 24 drücken, wobei die Außenluft in der Mischkammer 25 auch noch mit Umluft aus dem Umluftkanal 10 bei arbeitendem Lüfter 26 zum erforderlichen Zuluftmassestrom ergänzt werden kann.

Beim Druckbelüftungsbetrieb sind im Grundzustand die Stellventile 9, 13, 19, 22 geschlossen und das Stellventil 20 geöffnet. Beim Druckbelüftungsbetrieb nur mit dem Lüfter 11 ist zusätzlich zum Grundzustand das Stellventil 18 geschlossen und das Stellventil 14 geöffnet. Beim Druckbelüftungsbetrieb nur mit dem Lüfter 16 ist zusätzlich zum Grundzustand das Stellventil 14 geschlossen. Beim Druckbelüftungsbetrieb mit beiden Lüftern 11, 16 sind die Stellventile 14, 18 geöffnet.

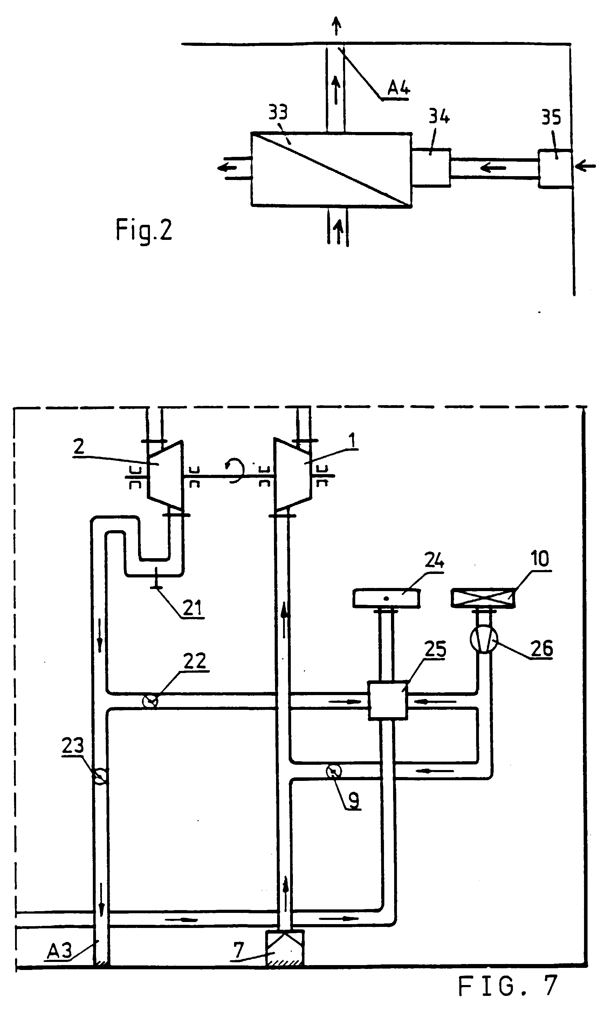

In Figur 2 ist eine Variante zur ersten Grundanordnung mit einem gemeinsamen Wärmeübertragerblock dargestellt. Bei dieser Variante sind die Wärmeübertrager 3 und 6 zu einem Wärmeübertragerblock 33 zusammengefaßt, der aus mehreren parallel und/oder in Reihe geschalteten Einzel-Wärmeübertragern besteht. Der zweite Kreis des Wärmeübertragerblocks 33 ist einerseits über einen Lüfter 34 mit einem Ansauggitter und -filter 35 und andererseits mit einem Luftauslaß A4 verbunden. Der erste Kreis des Wärmeübertragerblocks 33 ist einerseits mit dem Verdichter 4 und andererseits mit dem Druckventil 15 verbunden. Der Lüfter 34 ersetzt beide Lüfter 11, 16, das Ansauggitter und -filter 35 ersetzt beide Ansauggitter und -filter 12, 17 und der Luftauslaß A4 ersetzt beide Luftauslässe A1, A2, wodurch sich insgesamt eine beträchtliche Einsparung an Baukomponenten ergibt. Diese Variante ist zum Teil auch bei den nachfolgend beschriebenen Alternativen möglich.

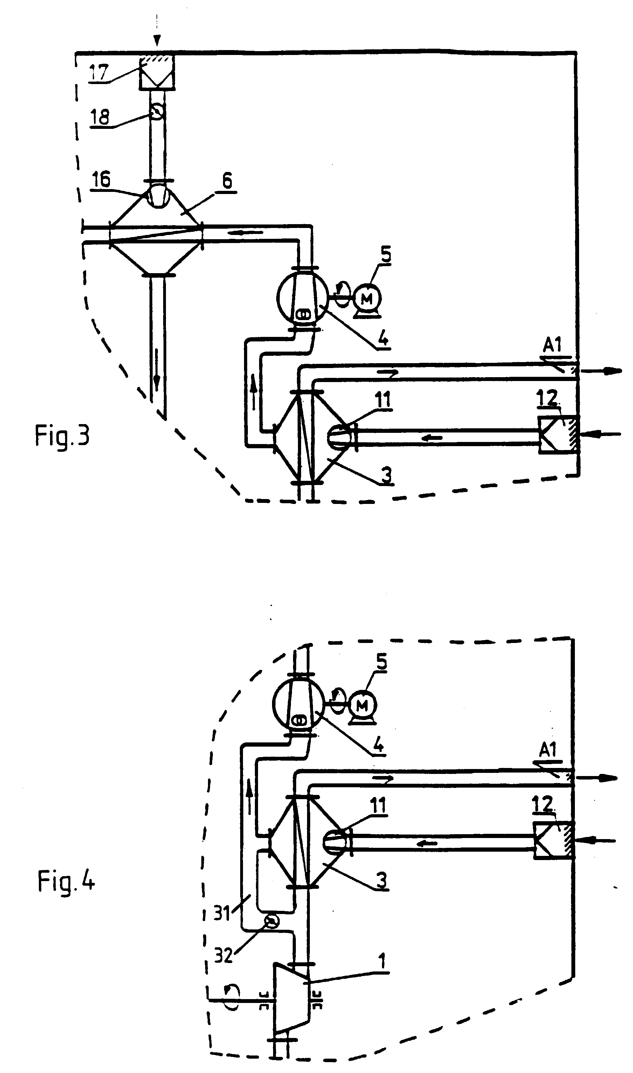

In Figur 3 ist eine erste Alternative zur ersten Grundanordnung mit lediglich einstufiger Luftaufheizung dargestellt. Bei dieser ersten Alternative wird der Außenluftanteil der Zuluft im Wärmepumpenbetrieb einstufig im Wärmeübertrager 6 aufgeheizt, während die zur Kühlung des Wärmeübertragers 3 erforderliche Außenluft wieder über den Luftauslaß A1 an die Umgebung abgeführt wird. Bei dieser ersten Variante entfallen vorteilhaft der Luftkanal 29 und die beiden Stellventile 13 und 14. Der übrige Aufbau entspricht der ersten Grundanordnung gemäß Figur 1.

In Figur 4 ist eine zweite Alternative zur ersten Grundanordnung mit lediglich einstufiger Luftaufheizung dargestellt. Bei dieser zweiten Alternative wird der Außenluftanteil der Zuluft im Wärmepumpenbetrieb einstufig im Wärmeübertrager 6 aufgeheizt. Des weiteren wird der im Wärmepumpenbetrieb in der geschlossenen Anlage zirkulierende Luftmassenstrom lediglich im Wärmeübertrager 6, nicht jedoch im Wärmeübertrager 3 gekühlt, was im einfachsten Fall durch Ausschalten des Lüfters 11 oder auch durch Umgehen des Wärmeübertragers 3 erreicht wird. Der erste Kreis des Wärmeübertragers 3 wird hierzu beispielsweise durch einen Bypaß 31 überbrückt, wobei der Bypaß 31 mittels eines Stellventils 32 gesperrt werden kann. Das Stellventil 32 ist im Heizbetrieb geöffnet und im Kühlbetrieb geschlossen. Der übrige Aufbau ist wie unter Figur 3 beschrieben.

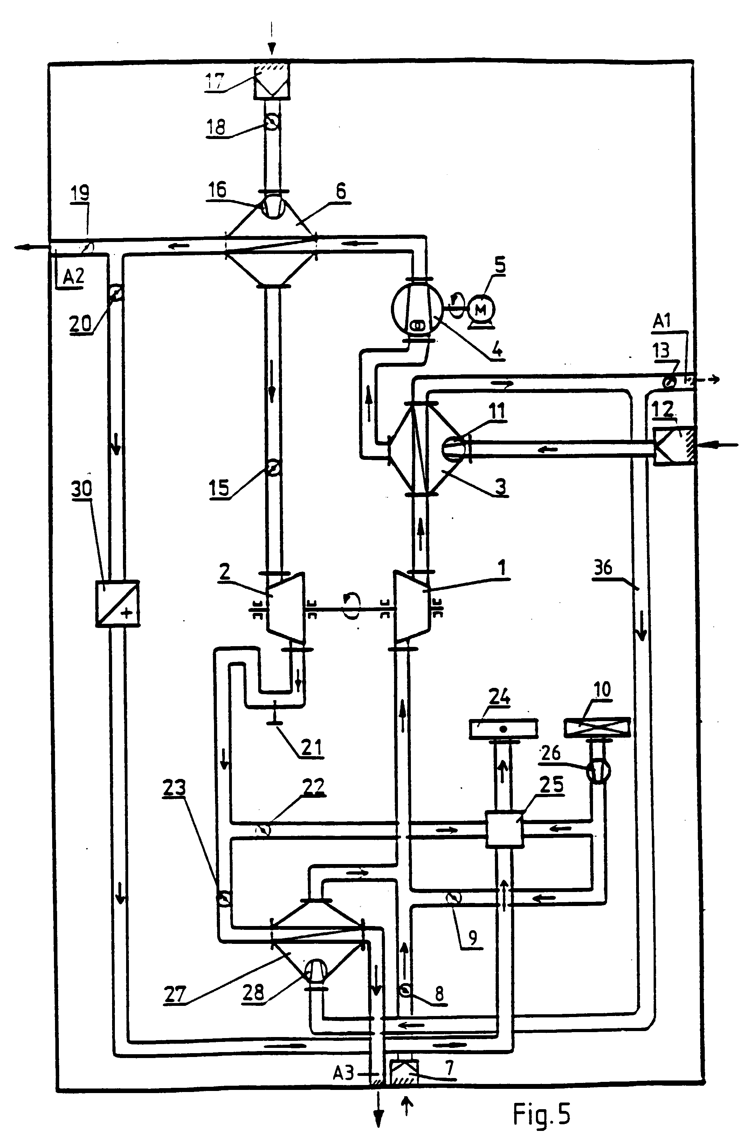

In Figur 5 ist eine dritte Alternative zur ersten Grundanordnung mit lediglich einstufiger Luftaufheizung dargestellt. Diese dritte Alternative geht aus von der unter Figur 3 beschriebenen ersten Alternative, wobei jedoch die im Wärmeübertrager 3 erwärmte Außenluft nicht direkt über den Luftauslaß A1 an die Umgebung abgeführt, sondern erst zum Abkühlen dem zweiten Kreis des Wärmeübertragers 27 zugeleitet wird. Hierzu verbindet ein Luftkanal 36 beide Wärmeübertrager 3, 27. Der Luftauslaß A1 und das Stellventil 13 können bedarfsweise entfallen. Der Luftkanal 29 und das Stellventil 14 werden bei dieser dritten Variante ebenfalls eingespart. Das Ansauggitter und -filter 7 führt bei dieser dritten Alternative zur Grundanordnung nicht mehr zum Wärmeübertrager 27. Der übrige Aufbau entspricht der ersten Grundanordnung gemäß Figur 1.

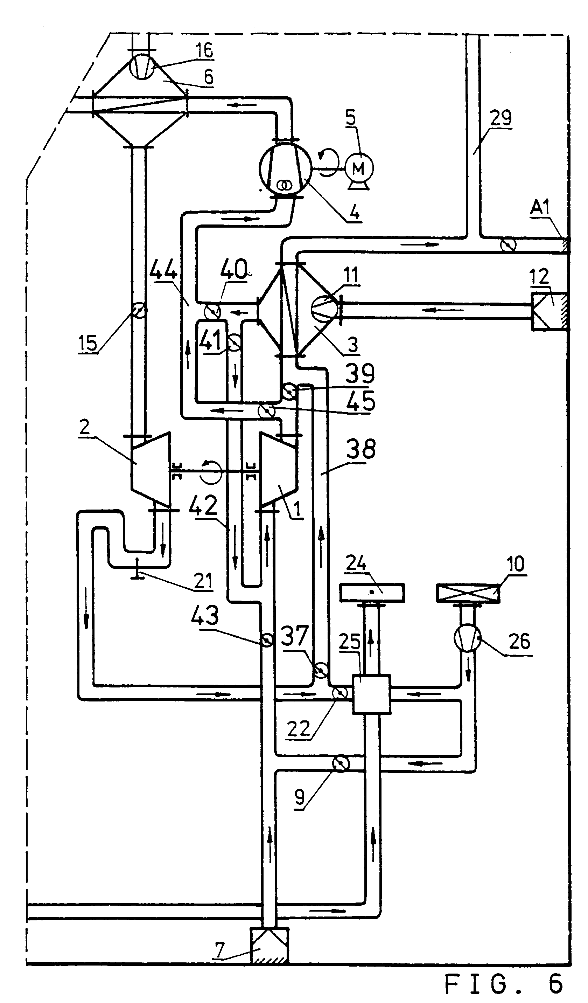

In Figur 6 ist eine vierte Alternative zur ersten Grundanordnung mit lediglich einstufiger Luftaufheizung dargestellt. Diese vierte Alternative geht aus von der unter Figur 4 beschriebenen zweiten Alternative, wobei jedoch der im Wärmepumpen-Betrieb (Heizbetrieb) zur Aufheizung der Außenluft nicht benötigte Wärmeübertrager 3 zur Erhitzung der aus der Luftentspannungsturbine 2 austretenden Luft eingesetzt wird und damit die Funktion des Wärmeübertragers 27 übernimmt. Der Wärmeübertrager 27 entfällt, da die Alternative gemäß Figur 6 im Heizbetrieb und im Kühlbetrieb lediglich zwei Wärmeübertrager benötigt. Im einzelnen ist der ausgangsseitige Luftkanal des Vorverdichters 1 über ein Stellventil 39 mit dem ersten Kreis des Wärmeübertragers 3 sowie alternativ über ein Stellventil 45 mit einem zur Saugseite des Nachverdichters 4 führenden Bypaß 44 verbindbar. Der erste Kreis des Wärmeübertragers 3 ist über ein Stellventil 40 mit dem Bypaß 44 und alternativ über ein Stellglied 41 mit einem Luftkanal 42 verbindbar. Der Luftkanal 42 führt zur Saugseite des Vorverdichters 1, wobei diese Saugseite über ein Stellventil 43 mit dem Ansauggitter und -filter 7 verbindbar ist. Der Luftkanal vom Ansauggitter und -filter 7 zum Stellventil 43 weist eine Abzweigung auf, in die bei Öffnung des Stellventils 9 Umluft eingeblasen werden kann.

Der saugseitige Luftkanal der Luftentspannungsturbine 2 ist bei Öffnung des Stellventils 22 mit der Mischkammer 25 und bei Öffnung eines Stellventils 37 mit einem Luftkanal 38 verbindbar. Dieser Luftkanal 38 mündet in einem Abzweig zwischen Stellventil 39 und erstem Kreis des Wärmeübertragers. Der übrige Aufbau entspricht der ersten Grundanordnung gemäß Figur 1. Im Wärmepumpen-Betrieb (Heizbetrieb) sind die Stellventile 37, 41 und 45 geöffnet und die Stellventile 9, 22, 39, 40, 43 geschlossen. Die aus der Luftentspannungsturbine 2 austretende Luft wird über den Luftkanal 38 dem ersten Kreis des Wärmeübertragers 3 zugeführt und dort durch die Außenluft erwärmt. Vom Wärmeübertrageraustritt wird die Luft über den Luftkanal 42 der Saugseite des Vorverdichters 1 zugeleitet. Der Bypaß 44 verbindet die Druckseite des Vorverdichters 1 mit der Saugseite des Nachverdichters 4. Der weitere Prozeßverlauf entspricht dem der ersten Grundanordnung.

Die während des Wärmepumpen-Betriebes im Wärmeübertrager 3 abgekühlte Außenluft kann zum Kühlen benutzt werden.

Ein elektrisches Nachheizgerät kann zur weiteren Aufheizung der bereits durch den Wärmeübertrager 6 aufgeheizten Außenluft vorgesehen sein.

Der Kältemaschinenbetrieb (Kühlbetrieb) erfolgt bei geöffneten Stellventilen 22, 39, 40, 43 und geschlossenen Stellventilen 37, 41, 45 in gleicher Weise wie bei der Grundanordnung.

Bei abgeschaltetem Nachverdichter 4 kann ein Druckbelüftungsbetrieb realisiert werden, indem der Lüfter des ersten und/oder zweiten Wärmeübertragers 3, 6 Außenluft ansaugt und durch den oder die Wärmeübertrager bis in den Zuluftkanal 24 drückt.

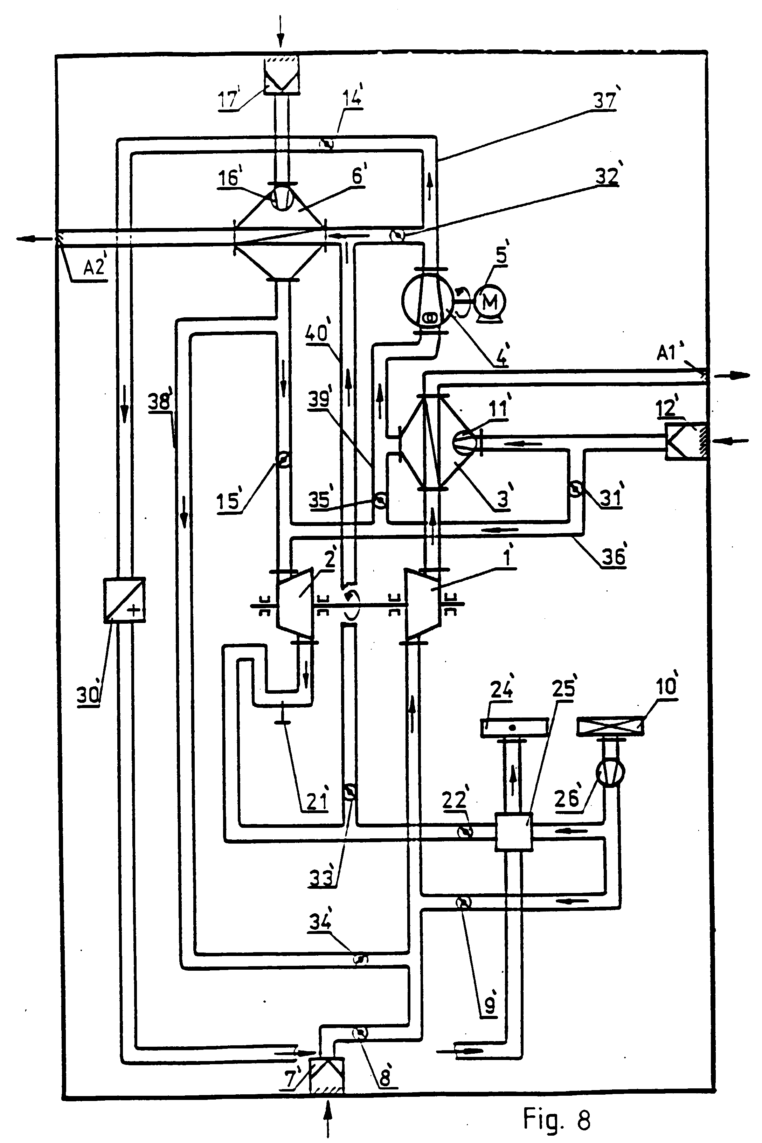

In Figur 7 ist eine fünfte Alternative zur ersten Grundanordnung mit ein- oder zweistufiger Luftaufheizung dargestellt. Diese fünfte Alternative geht sowohl aus der ersten Grundanordnung als auch aus deren Alternativen 1 und 2 hervor, wobei jedoch in allen Fällen der Wärmeübertrager 27 ersatzlos wegfällt und damit der Wärmepumpenbetrieb mit einer offenen Schaltung realisiert wird.

Im einzelnen ist der Vorverdichter 1 saugseitig mit dem Ansauggitter und -filter 7 verbunden, wobei ein zum Stellventil 9 führender Abzweig in diesen Luftkanal mündet. Die Auslaßseite der Luftentspannungsturbine 2 führt über das Stellventil 23 zum Luftauslaß A3. In den Luftkanal zwischen Stellventil 23 und Luftentspannungsturbine 2 mündet wiederum ein zum Stellventil 22 führender Abzweig.

Im Wärmepumpen-Betrieb (Heizbetrieb) ist das Stellventil 23 geöffnet und die Stellventile 9 und 22 sind geschlossen. Der Vorverdichter 1 saugt Außenluft über das Ansauggitter und -filter 7 an, während die Luftentspannungsturbine 2 kalte Luft über den Luftauslaß A3 an die Umgebung abgibt.

Die Druckseite des Vorverdichters ist über den Wärmeübertrager 3, den Nachverdichter 4, den Wärmeübertrager 6 und das Druckventil 15 mit der Luftentspannungsturbine 2 verbunden , wie in Figur 1 (Grundanordnung) dargestellt. Dabei kann der Wärmeübertrager 3 und 6 im Heizbetrieb zur zweistufigen Aufheizung der in die Mischkammer 25 bzw. den Zuluftkanal 24 einzublasenden Außenluft dienen, wie in Figur 1 gezeigt. Alternativ kann der Wärmeübertrager 3 zur Abkühlung der vom Vorverdichter 1 zum Nachverdichter 4 geförderten Luft dienen, wie in Figur 3 gezeigt (erste Alternative). Schließlich kann der Wärmeübertrager 3 alternativ auch mittels des Bypasses 31 im Heizbetrieb überbrückt werden, wie in Figur 4 gezeigt (zweite Alternative).

Die während des Wärmepumpen-Betriebes im Wärmeübertrager 3 abgekühlte Außenluft kann zum Kühlen benutzt werden.

Ein elektrisches Nachheizgerät kann zur weiteren Aufheizung der bereits durch den Wärmeübertrager 6 und ggf. 3 aufgeheizten Außenluft vorgesehen sein.

Der Kältemaschinenbetrieb (Kühlbetrieb) erfolgt bei geöffnetem Stellventil 22 und geschlossenem Stellventil 23. Das Stellventil 9 kann wahlweise geöffnet oder geschlossen sein. Es ergibt sich der bei der Grundanordnung gemäß Figur 1 bzw. den Alternativen 1, 2 und 3 beschriebene Kältemaschinenbetrieb mit einer Luftführung vom Ansauggitter und -filter 7 über den Vorverdichter 1, den Wärmeübertrager 3, den Nachverdichter 4, den Wärmeübertrager 6 und die Luftentspannungsturbine 2 zur Mischkammer 25, wobei die Wärmeübertrager 3 und 6 zur Kühlung der verdichteten Luft dienen.

Bei abgeschaltetem Nachverdichter 4 kann ein Druckbelüftungsbetrieb realisiert werden, indem der Lüfter des ersten und/oder zweiten Wärmeübertragers 3, 6 Außenluft ansaugt und durch den oder die Wärmeübertrager bis in den Zuluftkanal 24 drückt.

In Figur 8 ist eine zweite Grundanordnung einer zweistufigen Kaltluft-Kältemaschinen-Wärmepumpen-Anlage dargestellt. Es ist ein Vorverdichter 1' zu erkennen, der über eine Luftentspannungsturbine 2' angetrieben wird. Der ausgangsseitige Luftkanal des Vorverdichters 1' führt über den ersten Kreis eines Wärmeübertragers 3' zu einem Luftkanal 39' mit Stellventil 35' und zu einem Nachverdichter 4', der über einen Motor 5' antreibbar ist. Der ausgangsseitige Luftkanal des Nachverdichters 4' führt zu einem Stellventil 32' und zu einem Luftkanal 37' mit Stellventil 14'. Bei offenem Stellventil 14'ergibt sich ein Luftkanal über ein elektrisches Nachheizgerät 30' und eine Mischkammer 25' zu einem Zuluftkanal 24' eines Fahrzeuges.

Bei offenem Stellventil 32' ergibt sich ein Luftkanal über den ersten Kreis eines Wärmeübertragers 6' zu einem Luftkanal 38' mit Stellventil 34' und zu einem Druckventil 15'. Der ausgangsseitige Kanal des Druckventils 15' führt über die Luftentspannungsturbine 2' mit ausgangsseitigem Kondensatabscheider 21' zu zwei Stellventilen 22', 33'. Über das geöffnete Stellventil 22' wird der Zugang zur Mischkammer 25' gebildet. Bei offenem Stellventil 33' ergibt sich ein Luftkanal 40' zum ersten Kreis des Wärmeübertragers 6'.

Ein Ansauggitter und -filter 12' führt zu einem Stellventil 31' und über einen Lüfter 11' und den zweiten Kreis des Wärmeübertragers 3' zu einem Luftauslaß A1'. Bei offenem Stellventil 31' wird ein Luftkanal 36' zum eingangsseitigen Luftkanal der Luftentspannungsturbine 2' gebildet.

Ein Ansauggitter und -filter 17' führt über einen Lüfter 16' und den zweiten Kreis des Wärmeübertragers 6' zu einem Luftauslaß A2'.

Ein Lüfter 26' fördert die Umluft eines Umluftkanals 10' in die Mischkammer 25' und - bei Öffnung eines Stellventils 9' - zum eingangsseitigen Luftkanal des Vorverdichters 1'. Dieser eingangsseitige Luftkanal des Vorverdichters 1' ist ferner - bei Öffnung eines Stellventils 8' - mit einem Ansauggitter und -filter 7' verbunden. Ferner mündet der vom ersten Kreis des Wärmeübertragers 6' kommende Luftkanal 38' bei Öffnung des Stellventils 34' in diesen eingangsseitigen Luftkanal des Vorverdichters 1'.

Im Kühlbetrieb wird mit dem Vorverdichter 1', der von der Luftentspannungsturbine 2' angetrieben wird, dem Wärmeübertrager 3', dem Nachverdichter 4', der von dem Motor 5' angetrieben wird, und dem Wärmeübertrager 6' eine offene zweistufige Kaltluft-Kältemaschine realisiert. Der Vorverdichter 1' saugt über das Ansauggitter und -filter 7' bei geöffnetem Stellventil 8' und geschlossenem Stellventil 34' Außenluft an, die bei geöffnetem Stellventil 9' unter Einsatz des Lüfters 26' aus dem Umluftkanal 10' mit Umluft ergänzt werden kann. Anschließend verdichtet der Vorverdichter 1' die Außen- oder Mischluft auf einen Zwischendruck, bei dem sie in dem Wärmeübertrager 3' mit Außenluft gekühlt wird, welche bei geschlossenem Stellventil 31' mit dem Lüfter 11' über das Ansauggitter und -filter 12' angesaugt, in den Wärmeübertrager 3' gedrückt und nach der Wärmeaufnahme über den Luftauslaß A1' an die Umgebung abgeführt wird. Die so im Wärmeübertrager 3' abgekühlte Luft wird bei geschlossenem Stellventil 35' im Nachverdichter 4' auf den maximalen Prozeßdruck, der mit dem Druckventil 15' eingestellt wird, verdichtet und bei geöffnetem Stellventil 32' und geschlossenem Stellventil 14' anschließend in dem Wärmeübertrager 6' mit Außenluft bis auf den Eintrittszustand der Luft in die Luftentspannungsturbine 2' heruntergekühlt. Die Kühlluft des Wärmeübertragers 6' saugt der Lüfter 16' über das Ansauggitter und -filter 17' von außen an, die nach Wärmeaufnahme in dem Wärmeübertrager 6' über den Luftauslaß A2' an die Umgebung abgeführt wird.

In der Luftentspannungsturbine 2' erfolgt die Entspannung und damit eine Abkühlung der Luft. Bei Unterschreiten der Taupunkttemperatur kommt es zum Ausscheiden flüssigen Wassers aus der feuchten Luft, das sich in dem Kondensatabscheider 21' sammelt und nach Erreichen einer bestimmten Füllstandshöhe nach außen abgelassen wird.

Die nach der Flüssigkeitstrennung gesättigte Luft gelangt bei geöffnetem Stellventil 22' und geschlossenem Stellventil 33' in den Zuluftkanal 24', nachdem sie in der Mischkammer 25' gegebenenfalls durch Zumischen eines weiteren Umluftanteiles aus dem Umluftkanal 10' unter Einsatz des Lüfters 26' zum gewünschten Zuluft-Massestrom für die Kompensation einer bekannten Kühllast des Fahrzeuges ergänzt worden ist.

Bei geöffneten Stellventilen 31', 33', 34', 14' in den Luftkanälen 36', 40', 38' und 37' sowie bei geschlossenem Stellventil 35' im Luftkanal 39', geschlossenem Druckventil 15' und geschlossenen Stellventilen 22', 32', 8' wird die aus Vorverdichter 1', Wärmeübertrager 3', Nachverdichter 4', Motor 5', Wärmeübertrager 6' und Luftentspannungsturbine 2' bestehende zweistufige offene Kaltluft-Kältemaschine als zweistufige offene Wärmepumpe betrieben. Hierbei saugt die Luftentspannungsturbine 2' bei geöffnetem Stellventil 31', geschlossenem Stellventil 35' und geschlossenem Druckventil 15' bei ausgeschaltetem Lüfter 11' des Wärmeübertragers 3' über das Ansauggitter und -filter 12' Außenluft an und entspannt sie unterhalb des Außenluftdruckes, wobei sie gleichzeitig abgekühlt wird.

Die bei Taupunkttemperaturunterschreitung sich aus der feuchten Außenluft ausscheidende Flüssigkeit wird im Kondensatabscheider 21' von der gesättigten Luft getrennt und die gesättigte Luft wird anschließend bei geöffnetem Stellventil 33' und geschlossenen Stellventilen 22' und 32' in den Wärmeübertrager 6' geleitet. In diesem nimmt sie durch Abkühlen von Außenluft, die mit dem Lüfter 16' über das Ansauggitter und -filter 17' von außen angesaugt wird, Wärme auf und wird anschließend bei geöffnetem Stellventil 34', geschlossenem Stellventil 8' und wahlweise geöffnetem oder geschlossenem Stellventil 9' vom Vorverdichter 1' angesaugt. Bei geöffnetem Stellventil 9' saugt der Vorverdichter 1' zusätzlich Luft aus dem Umluftkanal 10' an: Die im Vorverdichter 1' auf den Zwischendruck vorverdichtete und dabei erwärmte Luft wird ohne Rückkühlung durch den Wärmeübertrager 3' geleitet.

In dem vom Motor 5' angetriebenen Nachverdichter 4' wird die Luft auf einen Druck verdichtet, der höher als der Umgebungsdruck ist. Die sich beim Nachverdichten weiter erwärmende Luft wird bei geöffnetem Stellventil 14' über das Nachheizaggregat 30', in dem die Luft bei Bedarf nachgeheizt werden kann, zunächst in die Mischkammer 25' geleitet, in der sie mit Umluft aus dem Umluftkanal 10' mit Hilfe des Lüfters 26' zum Zuluftmassestrom endgültig thermisch aufbereitet und schließlich in den Zuluftkanal 24' eingeblasen wird.

Dabei kann die im Wärmeübertrager 6' abgekühlte Außenluft bei Bedarf vorteilhaft zum Kühlen genutzt werden.

Gemäß einer Variante zur zweiten Grundanordnung der zweistufigen Kaltluft-Kältemaschine-Wärmepumpen-Anlage ist es vorgesehen, die durch die Verdichtung im Vorverdichter 1' erwärmte Außenuft im Wärmeübertrager 3' mit Außenluft, die der Lüfter 11' über das Ansauggitter und -filter 12' von außen ansaugt, zurückzukühlen.

Bei abgeschalteten Lüftern 11' und 16', geöffneten Stellventilen 31', 35', 14', geschlossenem Druckventil 15' und geschlossenen Stellventilen 33', 22', 32' arbeitet die zweite Grundanordnung einer zweistufigen Kaltluft-Kältemaschinen-Wärmepumpen-Anlage als Druckbelüftungsanlage. Dabei saugt der Nachverdichter 4' über die Luftkanäle 39', 36' und das Ansauggitter und -filter 12' Außenluft an und leitet sie durch den Luftkanal 37' und das ausgeschaltete Nachheizaggregat 30' sowie durch die Mischkammer 25', in der Umluft aus dem Umluftkanal 10' mit dem Lüfter 26' beigemischt werden kann, in den Zuluftkanal 24'.

Allgemein ist es bei beiden Grundanordnungen möglich, die während des Kühlbetriebs in den Wärmeübertragern 3, 3', 6, 6' erwärmte Luft zum Heizen zu nutzen (z.B. Zweikanalanlage bzw. Nachheizung bei Abteilwagen).

Die Kaltluft-Kältemaschinen-Wärmepumpen-Anlagen können mit Hilfe des Nachverdichters 4 bzw. 4' über eine Drehzahlregelung unter Einbeziehung des Druckventils 15 bzw. 15' geregelt werden. Ferner ist eine Regelung mit Hilfe der Wärmeübertrager 3 bzw. 3', 6 bzw. 6' und 27 und ihrer Lüfter 11 bzw. 11', 16 bzw. 16' und 28 möglich. Schließlich ist eine Regelung auch nur mit Hilfe der Veränderung des Mischungsverhältnisses Außen-/Umluft möglich.

## Patentansprüche

1. Kaltluft-Kältemaschinen-Anlage mit einem offenen Kühlkreis mit einem Vorverdichter (1), einem ersten Wärmeübertrager (3), einem motorisch angetriebenen Nachverdichter (4), einem zweiten Wärmeübertrager (6) und einer Luftentspannungsturbine (2), welche den Vorverdichter (1) antreibt, wobei die die Luftentspannungsturbine (2) verlassende Kaltluft in einen Zuluftkanal (24) gedrückt wird, dadurch gekennzeichnet, daß zum Heizen eine geschlossene Wärmepumpen-Anlage mit einem Kreis Vorverdichter (1) - Nachverdichter (4) - zweiter Wärmeübertrager (6) - Luftentspannungsturbine (2) - erster Wärmeübertrager (3) - Vorverdichter (1) gebildet wird, wobei mit dem ersten Wärmeübertrager (3) der Umgebung Wärme entzogen und mit dem zweiten Wärmeübertrager (6) zur Beheizung dienende Außenluft aufgeheizt und in den Zuluftkanal (24) gedrückt wird (Figur 6).

2. Kaltluft-Kältemaschinen-Anlage mit einem offenen Kühlkreis mit einem Vorverdichter (1), einem ersten Wärmeübertrager (3), einem motorisch angetriebenen Nachverdichter (4), einem zweiten Wärmeübertrager (6) und einer Luftentspannungsturbine (2), welche den Vorverdichter (1) antreibt, wobei die die Luftentspannungsturbine (2) verlassende Kaltluft in einen Zuluftkanal (24) gedrück wird, dadurch gekennzeichnet, daß zum Heizen eine offene Wärmepumpen-Anlage mit einer Luftführung Vorverdichter (1) - Nachverdichter (4) - zweiter Wärmeübertrager (6) - Luftentspannungsturbine (2) gebildet wird, wobei der Vorverdichter (1) Außenluft aus der Umgebung ansaugt und die Luftentspannungsturbine (2) abgekühlte Luft an die Umgebung abführt und wobei mit dem zweiten Wärmeübertrager (6) zur Beheizung dienende Außenluft aufgeheizt und in den Zuluftkanal (24) gedrückt wird (Figur 7).

3. Anlage nach Anspruch 2, dadurch gekennzeichnet, daß der erste Wärmeübertrager (3) zum Heizen mit einem Bypaß (31) überbrückt wird (Figur 4).

4. Anlage nach Anspruch 1, dadurch gekennzeichnet, daß zusätzlich ein dritter Wärmeübertrager (27) vorgesehen ist, der zum Heizen in den Kreis zwischen Luftentspannungsturbine (2) und Vorverdichter (1) zuschaltbar ist, wodurch eine geschlossene Wärmepumpen-Anlage mit einem Kreis Vorverdichter (1) - Nachverdichter (4) - zweiter Wärmeübertrager (6) - Luftentspannungsturbine (2) - dritter Wärmeübertrager (27) - Vorverdichter (1) gebildet wird, wobei mit dem dritten Wärmeübertrager (27) der Umgebung Wärme entzogen und mit dem zweiten Wärmeübertrager (6)zur Beheizung dienende Außenluft aufgeheizt und in den Zuluftkanal (24) gedrückt wird, wobei der erste Wärmeübertrager (3) mit einem Bypaß (31) überbrückt wird (Figur 1, 4).

5. Anlage nach Anspruch 2 und/oder 4, dadurch gekennzeichnet, daß der Wärmepumpenkreis zusätzlich den ersten Wärmeübertrager (3) umfaßt und die zum Kühlen dieses Wärmeübertragers (3) erforderliche Außenluft wieder an die Umgebung abgeführt wird (Figur 3).

6. Anlage nach Anspruch 4, dadurch gekennzeichnet, daß der Wärmepumpenkreis zusätzlich den ersten Wärmeübertrager (3) umfaßt und die zum Kühlen dieses Wärmeübertragers (3) erforderliche Außenluft zur Abkühlung dem dritten Wärmeübertrager (27) zugeleitet wird (Figur 5).

7. Anlage nach Anspruch 2 und/oder 4, dadurch gekennzeichnet, daß der Wärmepumpenkreis zusätzlich den ersten Wärmeübertrager (3) umfaßt und mit dem ersten und dem zweiten Wärmeübertrager (3,6) zur Beheizung dienende Außenluft aufgeheizt wird (Figur 1).

8. Anlage nach wenigstens einem der Ansprüche 1 bis 7, dadurch gekennzeichnet, daß der erste und zweite Wärmeübertrager (3,6) zu einem Wärmeübertragerblock (33), bestehend aus mehreren parallel und/oder in Reihe geschalteten Einzel-Wärmeübertragern, zusammengebaut sind (Figur 2).

9. Anlage nach wenigstens einem der Ansprüche 1 bis 8, dadurch gekennzeichnet, daß die während des Wärmepumpen-betriebes im ersten (3) oder im dritten Wärmeübertrager (27) abgekühlte Außenluft zum Kühlen genutzt wird.

10. Anlage nach wenigstens einem der Ansprüche 1 bis 9, dadurch gekennzeichnet, daß ein elektrisches Nachheizaggregat (30) zur weiteren Aufheizung der bereits mindestens durch den zweiten Wärmeübertrager (6) aufgeheizten, zur Beheizung dienenden Außenluft vorgesehen ist.

11. Anlage nach wenigstens einem der Ansprüche 1 bis 10, dadurch gekennzeichnet, daß bei abgeschaltetem Nachverdichter (5) ein Druckbelüftungsbetrieb realisiert wird, indem ein Lüfter (11,16) des ersten und/oder zweiten Wärmeübertragers (3,6) Außenluft ansaugt und durch den oder die Wärmeübertrager bis in den Zuluftkanal (24) drückt.

12. Kaltluft-Kältemaschinen-Anlage mit einem offenen Kühlkreis mit einem Vorverdichter (1'), einem ersten Wärmeübertrager (3'), einem motorisch angetriebenen Nachverdichter (4'), einem zweiten Wärmeübertrager (6') und einer Luftentspannungsturbine (2'), welche den Vorverdichter (1') antreibt, wobei die die Luftentspannungsturbine (2) verlassende Kaltluft in einen Zuluftkanal (24) gedrückt wird, dadurch gekennzeichnet, daß zum Heizen eine offene Wärmepumpen-Anlage mit einer Luftführung Luftentspannungsturbine (2') - zweiter Wärmeübertrager (6') - Vorverdichter (1') - Nachverdichter (4') gebildet wird, wobei die Luftentspannungsturbine (2') zur Beheizung dienende Außenluft ansaugt, mit dem zweiten Wärmeübertrager (6') der Umgebung Wärme entzogen und der Luft zugeführt wird und mit dem Vorverdichter (1') und dem Nachverdichter (4') diese Luft in zwei Stufen aufgeheizt und in den Zuluftkanal (24') gedrückt wird (Figur 8).

13. Anlage nach Anspruch 12, dadurch gekennzeichnet, daß die durch die Verdichtung im Vorverdichter (1') erwärmte Luft im zwischen Vorverdichter (1') und Nachverdichter (4') angeordneten ersten Wärmeübertrager (3') zurückgekühlt wird.

14. Anlage nach Anspruch 12 und/oder 13, dadurch gekennzeichnet, daß die während des Wärmepumpenbetriebes im zweiten Wärmeübertrager (6') abgekühlte Außenluft zum Kühlen genutzt wird.

15. Anlage nach einem der Ansprüche 12 bis 14, dadurch gekennzeichnet, daß ein elektrisches Nachheizaggregat (30') zur weiteren Aufheizung der bereits durch den Vorverdichter (1') und den Nachverdichter (4') aufgeheizten Luft vorgesehen ist.

16. Anlage nach einem der Ansprüche 12 bis 15, dadurch gekennzeichnet, daß ein Druckbelüftungsbetrieb mit Hilfe des Nachverdichters (4') realisiert wird, der Außenluft ansaugt und in den Zuluftkanal (24') drückt.

17. Anlage nach wenigstens einem der Ansprüche 1 bis 16, dadurch gekennzeichnet, daß eine Mischkammer (25,25') vorgesehen ist, um den Zuluftmassestrom durch Zumischen von Umluft aufzubereiten und dem Zuluftkanal (24,24') zuzuleiten.

18. Anlage nach einem der Ansprüche 1 bis 17, dadurch gekennzeichnet, daß die während des Kühlbetriebes in den Wärmeübertragern (3,6,3',6') erwärmte Luft zum Heizen genutzt wird.

## Claims

1. Cold-air refrigerating-machine installation having an open cooling circuit with a precompressor (1), a first heat exchanger (3), a motor-driven secondary compressor (4), a second heat exchanger (6) and an air-expansion turbine (2) which drives the precompressor (1), the cold air which leaves the air-expansion turbine (2) being forced into a supply-air duct (24), characterized in that, for heating, a closed heat-pump installation with a circuit comprising precompressor (1) - secondary compressor (4) - second heat exchanger (6) - air-expansion turbine (2) - first heat exchanger (3) - precompressor (1) is formed, the first heat exchanger (3) being used to remove heat from the surroundings, and the second heat exchanger (6) being used to heat outside air serving for heating purposes and to force said air into the supply-air duct (24) (Figure 6).

2. Cold-air refrigerating-machine installation having an open cooling circuit with a precompressor (1), a first heat exchanger (3), a motor-driven secondary compressor (4), a second heat exchanger (6) and an air-expansion turbine (2) which drives the precompressor (1), the cold air which leaves the air-expansion turbine (2) being forced into a supply-air duct (24), characterized in that, for heating, an open heat-pump installation with air conduction between precompressor (1) - secondary compressor (4) - second heat exchanger (6) - air-expansion turbine (2) is formed, the precompressor (1) taking in outside air from the surroundings, and the air-expansion turbine (2) discharging cooled air to the surroundings, the second heat exchanger (6) being used to heat outside air serving for heating purposes and to force said air into the supply-air duct (24) (Figure 7).

3. Installation according to Claim 2, characterized in that, for heating, the first heat exchanger (3) is bridged by a bypass (31) (Figure 4).

4. Installation according to Claim 1, characterized in that, in addition, a third heat exchanger (27) is provided and, for heating, can be switched into the circuit between air-expansion turbine (2) and precompressor (1), as a result of which a closed heat-pump installation with a circuit comprising precompressor (1) - secondary compressor (4) - second heat exchanger (6) - air-expansion turbine (2) - third heat exchanger (27) - precompressor (1) is formed, the third heat exchanger (27) being used to remove heat from the surroundings, and the second heat exchanger (6) being used to heat outside air serving for heating purposes and to force said air into the supply-air duct (24), the first heat exchanger (3) being bridged by a bypass (31) (Figures 1, 4).

5. Installation according to Claim 2 and/or 4, characterized in that the heat-pump circuit additionally comprises the first heat exchanger (3), and the outside air necessary for cooling said heat exchanger (3) is discharged to the surroundings again (Figure 3).

6. Installation according to Claim 4, characterized in that the heat-pump circuit additionally comprises the first heat exchanger (3), and the outside air necessary for cooling said heat exchanger (3) is supplied, for cooling, to the third heat exchanger (27) (Figure 5).

7. Installation according to Claim 2 and/or 4, characterized in that the heat-pump circuit additionally comprises the first heat exchanger (3), and the first and the second heat exchangers (3, 6) are used to heat outside air serving for heating purposes (Figure 1).

8. Installation according to at least one of Claims 1 to 7, characterized in that the first and second heat exchangers (3, 6) are assembled together to form a heat-exchanger block (33), comprising a plurality of individual heat exchangers connected in parallel and/or in series (Figure 2).

9. Installation according to at least one of Claims 1 to 8, characterized in that the outside air cooled during heat-pump operation in the first (3) or in the third heat exchanger (27) is used for cooling purposes.

10. Installation according to at least one of Claims 1 to 9, characterized in that provision is made for an electric secondary-heating unit (30) for further heating the outside air which has already been heated at least by the second heat exchanger (6) and serves for heating purposes.

11. Installation according to at least one of Claims 1 to 10, characterized in that, when the secondary compressor (5) [sic] is switched off, pressurized ventilation operation is realized, in that a fan (11, 16) of the first and/or second heat exchanger (3, 6) takes in outside air and forces it, through the heat exchanger or heat exchangers, into the supply-air duct (24).

12. Cold-air refrigerating-machine installation having an open cooling circuit with a precompressor (1'), a first heat exchanger (3'), a motor-driven secondary compressor (4'), a second heat exchanger (6') and an air-expansion turbine (2') which drives the precompressor (1'), the cold air which leaves the air-expansion turbine (2) [sic] being forced into a supply-air duct (24) [sic], characterized in that, for heating, an open heat-pump installation with air conduction between air-expansion turbine (2') - second heat exchanger (6') - precompressor (1') - secondary compressor (4') is formed, the air-expansion turbine (2') taking in outside air serving for heating purposes, the second heat exchanger (6') being used to remove heat from the surroundings and supply it to the air, and the precompressor (1') and the secondary compressor (4') being used to heat said air in two stages and force it into the supply-air duct (24') (Figure 8).

13. Installation according to Claim 12, characterized in that the air heated by the compression operation in the precompressor (1') is recooled in the first heat exchanger (3') arranged between precompressor (1') and secondary compressor (4').

14. Installation according to Claim 12 and/or 13, characterized in that the outside air cooled during heat-pump operation in the second heat exchanger (6') is used for cooling purposes.

15. Installation according to one of Claims 12 to 14, characterized in that provision is made for an electric secondary-heating unit (30') for further heating the air which has already been heated by the precompressor (1') and the secondary compressor (4').

16. Installation according to one of Claims 12 to 15, characterized in that pressurized ventilation operation is realized with the aid of the secondary compressor (4'), which takes in outside air and forces the latter into the supply-air duct (24').

17. Installation according to at least one of Claims 1 to 16, characterized in that a mixing chamber (25, 25') is provided in order to prepare the supply-air-mass stream by mixing in circulating air and to supply said stream to the supply-air duct (24, 24').

18. Installation according to one of Claims 1 to 17, characterized in that the air heated during cooling operation in the heat exchangers (3, 6, 3', 6') is used for heating purposes.

## Revendications

1. Installation frigorifique à compression d'air avec un circuit de refroidissement ouvert comprenant un compresseur primaire (1), un premier échangeur de chaleur (3), un compresseur secondaire (4) entraîné mécaniquement, un deuxième échangeur de chaleur (6) et une turbine de détente d'air (2) qui entraîne le compresseur primaire (1), l'air froid sortant de la turbine de détente d'air (2) étant refoulé dans un conduit d'air d'alimentation (24), caractérisée par le fait que, pour le chauffage, une installation de pompe à chaleur à circuit fermé avec un circuit compresseur primaire (1) - compresseur secondaire (4) - deuxième échangeur de chaleur (6) - turbine de détente d'air (2) - premier échangeur de chaleur (3) - compresseur primaire (1) est formée, de la chaleur étant prélevée dans l'environnement à l'aide du premier échangeur de chaleur (3) et de l'air extérieur destiné au chauffage étant réchauffé par le deuxième échangeur de chaleur (6) et refoulé dans le conduit d'air d'alimentation (24) (figure 6).

2. Installation frigorifique à compression d'air avec un circuit de refroidissement ouvert comprenant un compresseur primaire (1), un premier échangeur de chaleur (3), un compresseur secondaire (4) entraîné mécaniquement, un deuxième échangeur de chaleur (6) et une turbine de détente d'air (2) qui entraîne le compresseur primaire (1), l'air froid sortant de la turbine de détente d'air (2) étant refoulé dans un conduitd'air d'alimentation (24), caractérisée par le fait que, pour le chauffage, une installation de pompe à chaleur à circuit ouvert avec une circulation de l'air compresseur primaire (1) - compresseur secondaire (4) - deuxième échangeur de chaleur (6) - turbine de détente d'air (2) est formée, le compresseur primaire (1) aspirant de l'air extérieur dans l'environnement et la turbine de détente (2) rejetant l'air refroidi dans l'atmosphère, de l'air extérieur destiné au chauffage étant réchauffé par le deuxième échangeur de chaleur (6) et refoulé dans le conduit d'air d'alimentation (24) (figure 7).

3. Installation selon la revendication 2, caractérisée par le fait que le premier échangeur (3) est contourné par un by-pass (31) pour le chauffage (figure 4).

4. Installation selon la revendication 1, caractérisée par le fait qu'il est est prévu un troisième échangeur de chaleur (27) qui, pour le chauffage, peut être inséré dans le circuit entre la turbine de détente d'air (2) et le compresseur primaire (1), une installation de pompe à chaleur à circuit fermé avec un circuit compresseur primaire (1) - compresseur secondaire (4) - deuxième échangeur de chaleur (6) - turbine de détente d'air (2) - troisième échangeur de chaleur (27) - compresseur primaire (1) étant ainsi formée, de la chaleur étant prélevée dans l'environnement à l'aide du troisième échangeur de chaleur (27) et de l'air extérieur destiné au chauffage étant réchauffé par le deuxième échangeur de chaleur (6) et refoulé dans le conduit d'air d'alimentation (24), tandis que le premier échangeur de chaleur (3) est contourné par un by-pass (31) (figures 1 et 4).

5. Installation selon revendication 2 et/ou 4, caractérisé par le fait que le circuit de pompe à chaleur comprend en plus le premier échangeur de chaleur (3) et que l'air extérieur assurant le refroidissement de cet échangeur (3) est rejeté dans l'atmosphère (figure 3).

6. Installation selon la revendication 4, caractérisé par le fait que le circuit de pompe à chaleur comprend en plus le premier échangeur de chaleur (3) et que l'air extérieur assurant le refroidissement de l'échangeur (3) est utilisé pour refroidir le troisième échangeur de chaleur (27) (figure 5).

7. Installation selon revendication 2 et/ou 4, caractérisé par le fait que le circuit de pompe à chaleur comprend en plus le premier échangeur de chaleur (3) et que l'air extérieur destiné au chauffage est réchauffé à l'aide des premier et deuxième échangeurs thermiques (3, 6) (figure 1).

8. Installation selon au moins une des revendications 1 à 7, caractérisé par le fait que les premier et deuxième échangeurs thermiques (3, 6) sont groupés en un bloc d'échangeur (33) formé de plusieurs échangeurs individuels branchés en parallèle et/ou en série (figure 2).

9. Installation selon au moins une des revendications 1 à 8, caractérisé par le fait que l'air extérieur refroidi dans le premier (3) ou le troisième (27) échangeur de chaleur pendant le fonctionnement en pompe à chaleur est utilisé pour le refroidissement.

10. Installation selon au moins une des revendications 1 à 9, caractérisé par le fait qu'il est prévu un réchauffeur (30) électrique pour chauffer plus fortement l'air extérieur de chauffage préalablement réchauffé dans le deuxième échangeur de chaleur (6) au moins.

11. Installation selon au moins une des revendications 1 à 10, caractérisé par le fait que, lorsque le compresseur secondaire (4) est arrêté un fonctionnement en ventilation forcée est établi par le fait qu'un ventilateur (3, 6) du premier et/ou deuxième échangeur de chaleur (3,6) aspire de l'air extérieur et le refoule à travers le ou les échangeurs dans le conduit d'air d'alimentation (24).

12. Installation frigorifique à compression d'air avec un circuit frigorifique ouvert comprenant un compresseur primaire (1'), un premier échangeur de chaleur (3'), un compresseur secondaire (4') entraîné mécaniquement, un deuxième échangeur de chaleur (6') et une turbine de détente d'air (2') qui entraîne le compresseur primaire (1'), l'air froid sortant de la turbine de détente d'air (2') étant refoulé dans un conduit d'air d'alimentation (24'), caractérisée par le fait que, pour le chauffage, une installation de pompe à chaleur à circuit ouvert avec un circuit turbine de détente d'air (2') - deuxième échangeur de chaleur (6') - compresseur primaire ('1) - compresseur secondaire (4') est formée, la turbine de détente d'air (2') aspirant de l'air extérieur pour le chauffage, de la chaleur étant prélevée dans l'environnement à l'aide du deuxième échangeur de chaleur (6') et cédée à l'air extérieur et cet air étant réchauffé en deux étapes par le le compresseur primaire (1') et le le compresseur secondaire (4') puis refoulé dans le conduit d'air d'alimentation (24) (figure 8).

13. Installation selon la revendication 12, caractérisée par le fait que l'air échauffé par la compression dans le compresseur primaire (1') est refroidi dans le premier échangeur (3') disposé entre le compresseur primaire (1') et le compresseur secondaire (4').

14. Installation selon revendication 12 et/ou 13, caractérisé par le fait que l'air extérieur refroidi dans le deuxième échangeur de chaleur (6') pendant le fonctionnement en pompe à chaleur est utilisé pour le refroidissement.

15. Installation selon une des revendications 12 à 14, caractérisé par le fait qu'il est prévu un réchauffeur (30') électrique pour chauffer plus fortement l'air extérieur de chauffage préalablement réchauffé dans le compresseur primaire (1') et le compresseur secondaire (4').

16. Installation selon une des revendications 12 à 15, caractérisé par le fait qu'un fonctionnement en ventilation forcée est établi à l'aide du compresseur secondaire (4') qui aspire de l'air extérieur et le refoule dans le conduit d'air d'alimentation (24').

17. Installation selon au moins une des revendications 1 à 16, caractérisé par le fait qu'il est prévu une chambre de mélange (25, 25') afin de traiter le flux d'air d'alimentation par mélange de celui-ci avec de l'air recyclé et de l'envoyer dans le conduit d'air d'alimentation (24, 24').

18. Installation selon au moins une des revendications 1 à 17, caractérisé par le fait que l'air réchauffé dans les échangeurs thermiques (3, 6, 3', 6') au cours du fonctionnement frigorifique est utilisé pour le chauffage.
